# EUROPEAN PATENT SPECIFICATION

(11) **EP 2 138 028 B1**
(45) Date of publication and mention of the grant of the patent: **01.01.2014**
(21) Application number: 09163233.1
(22) Date of filing: 19.06.2009
(51) Int. Cl.: A01D 46/26

(54) **Beating apparatus, particularly for beating olives and the like**
Schlagvorrichtung, insbesondere zum Schlagen von Oliven und dergleichen
Batteur, en particulier pour battre les olives et similaire

(30) Priority: 27.06.2008 IT PD20080191
(43) Date of publication of application: 30.12.2009
(73) Proprietor: ZANON S.R.L., 35011 Campodarsego (Padova) (IT)
(72) Inventor: Zanon, Franco, 35011 Campodarsego (Padova) (IT)
(74) Representative: Modiano, Micaela Nadia

(56) References cited:
- EP-A- 1 116 432
- EP-A- 1 175 823
- EP-A- 1 621 063
- EP-A1- 1 053 672
- EP-A1- 1 520 463
- WO-A-2007/129207
- WO-A-2008/071702
- ES-U- 1 067 051
- FR-A- 1 301 276
- US-A- 5 425 225
- US-A1- 2002 088 091

## Description

The present invention relates to a beating apparatus, particularly for beating olives and the like.

Beating is a historically known operation aimed at causing the fruits of a plant to fall in order to pick them.

Beating methods generally provide for an operation for shaking the branches of the plant in order to cause the separation of the fruits from them.

This shaking is performed with the aid of tools that can be simple sticks or rakes or equipment dedicated to this, such as modem beating units.

These units have, at an active end of an elongated handle, devices provided with rods moved by a motor.

The operator inserts the moving rods among the branches of the tree, so such rods shake the branches and optionally strike them, causing the fruits to fall from them.

Various types of beating apparatus are currently known, some of which have a circular head that is supported by the working end of the handle and support perimetrically rods which rotate according to a conical path.

Another currently known apparatus has, at the working end of the handle, a pair of oscillating sectors that are shaped like a rake and are pivoted symmetrically on opposite sides of the working end.

Motor means actuate the symmetrical oscillation of the oscillating sectors, which, when inserted among the branches of a tree, shake them, further allowing, by way of their rake-like configuration, a combing operation thereof, to the full advantage of rapid and effective beating of the fruits.

In one currently known model of beating apparatus, such motor means comprise an electric motor, which is supported at the end of the handle that lies opposite its working end, and a mechanical transmission, passing within the handle functionally connects the motor to a piston device that actuates the symmetrical oscillation of the oscillating sectors.

Although it is currently greatly appreciated, this apparatus has some aspects that can be improved.

In fact, when both oscillating sectors act on a branch simultaneously, due to their symmetrical oscillation the action of one of them is antagonist with respect to the other one, so as to inhibit the shaking effect on the branch.

In the field of beating, therefore, the need is felt currently for apparatuses that allow effective shaking of the branches while simultaneously avoiding damage thereof b friction or percussion.

ES 1067051-U discloses a beating apparatus as defined in the preamble of claim 1.

The aim of the present invention is to provide an apparatus for beating, particularly for beating olives and the like, that meets this requirement, allowing more effective shaking of the branches on which it acts with respect to currently known apparatuses.

Within this aim, an object of the invention is to provide a beating apparatus that is easy to use and maneuverable as well as reliable over time.

Another object of the invention is to provide a beating apparatus that is structurally simple and easy to use and can be manufactured with relatively low costs.

This aim and these and other objects, which will become better apparent hereinafter, are achieved by a beating apparatus, particularly for beating olives and the like, as defined in claim 1.

Further characteristics and advantages of the invention will become better apparent from the following detailed description of some preferred but not exclusive embodiments of the beating apparatus according to the invention, illustrated by way of non-limiting example in the accompanying drawings, wherein:

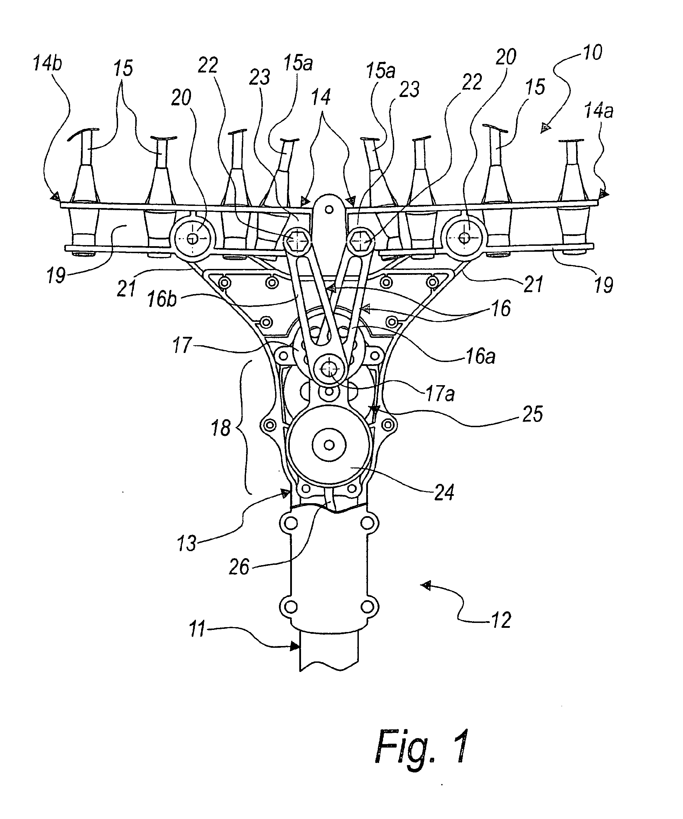

Figure 1 is a partially sectional enlarged-scale front view of a detail of a beating apparatus according to the invention;

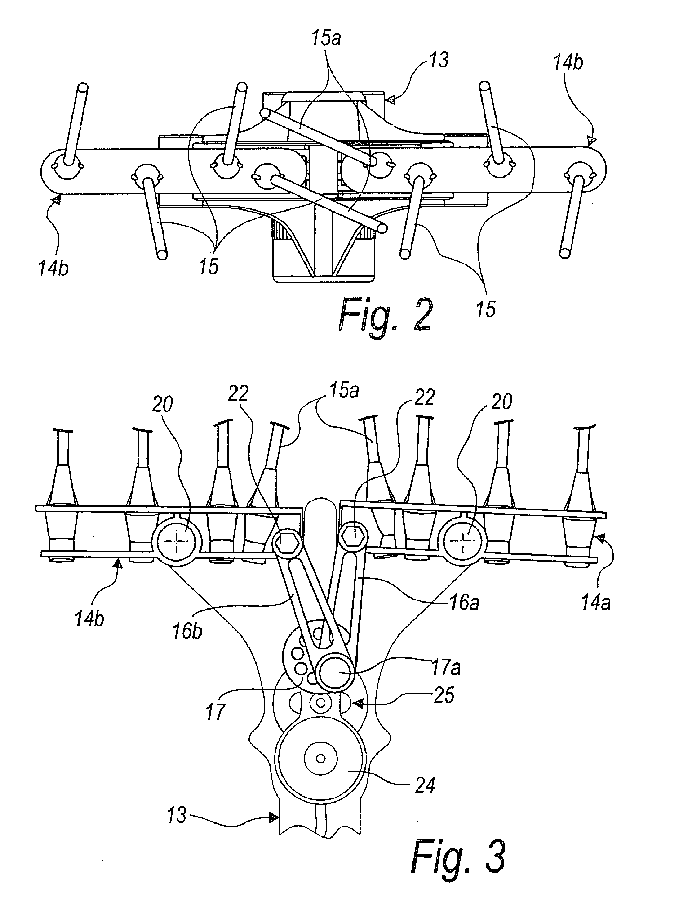

Figure 2 is a top plan view of the beating apparatus according to the invention;
Figure 3 is a view of the detail of Figure 1, of the beating apparatus according to the invention, in a different operating configuration;

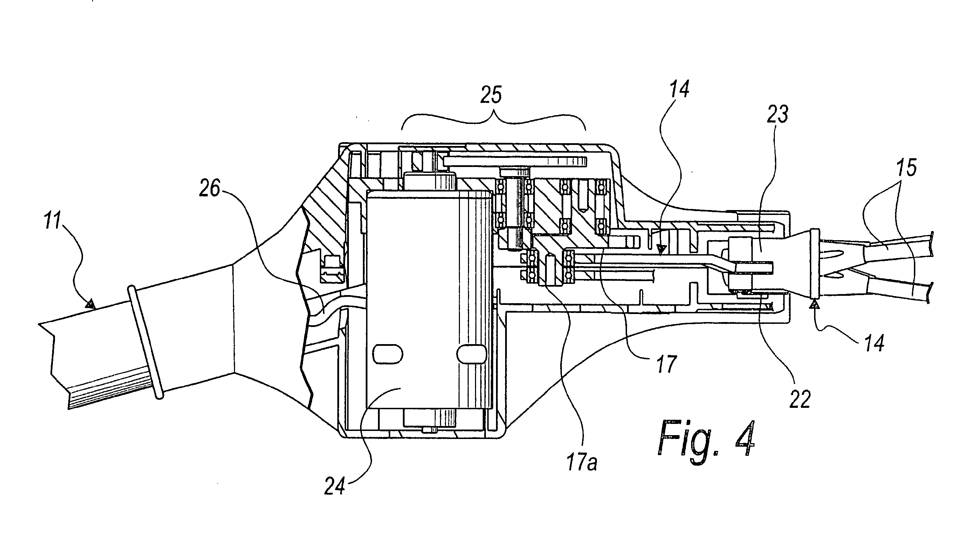

Figure 4 is a partially sectional enlarged-scale side view of a detail of the beating apparatus according to the invention;

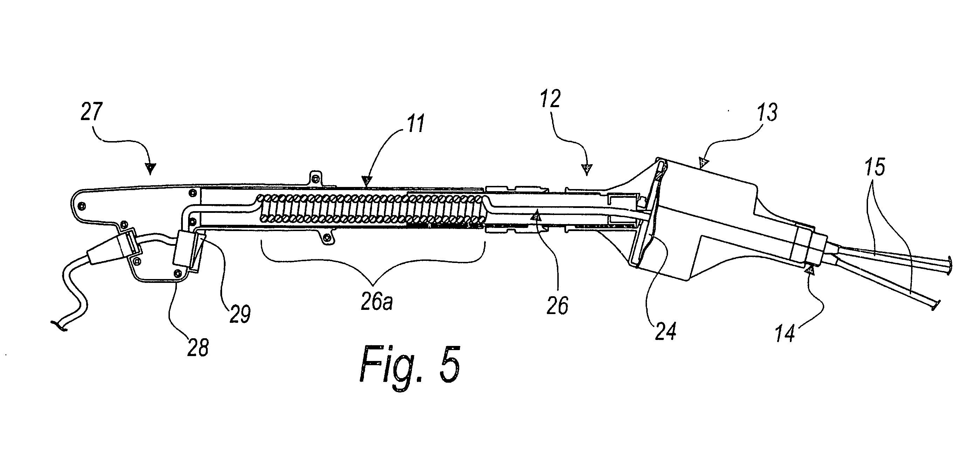

Figure 5 is a partially sectional side elevation view of the beating apparatus according to the invention;
Figure 6 is an enlarged-scale perspective view of a detail of the beating apparatus according to the invention;
Figures 7a and 7b are partially sectional enlarged-scale views of another detail of the beating apparatus according to the invention in various embodiments;
Figure 8 is a perspective view of the detail shown in Figure 7a.

With reference to the figures, the reference numeral 10 generally designates a beating apparatus, particularly for beating olives and the like, which comprises an elongated handle 11 that has, at a working end 12, a supporting body 13 to which at least one oscillating sector 14 provided with beating rods 15 is articulated.

Advantageously, the rods 15 are made of carbon fibers, have a tubular structure and mutually diverge so as to define a large region of action during use.

A particularity of the beating apparatus 10 is that it comprises a linkage element 16, which functionally interconnects a crank element 17 to the oscillating sector 14 in order to impart thereto, during use, an oscillating motion.

The crank element 17 is functionally connected to motor means 18 in order to be actuated by them during use.

In the embodiment described here by way of non-limiting example, the beating apparatus 10 advantageously has two oscillating sectors 14, which are functionally connected by way of two linkage elements 16 to the crank element 17.

In particular, the crank element 17 conveniently has an eccentric pivot 17a, to which a first one 16a and a second one 16b of the linkage elements 16 are rotatably connected, such linkage elements being respectively connected rotatably to a first one 14a and a second one 14b of the oscillating sectors 14, thus interconnecting them functionally to the crank element 17.

The kinematic structure thus defined, during use of the beating apparatus 10, imposes an oscillation to the first oscillating sector 14a that is phase-shifted with respect to the oscillation of the second one 14b of the oscillating sectors 14.

The first one 14a and the second one 14b of the oscillating sectors 14 preferably comprise elongated bodies 19 for supporting the rods 15, which are pivoted by means of corresponding fulcrums 20 to arms 21 of the supporting body 13, which is fork-shaped.

Moreover, the first linkage element 16a and the second linkage element 16b are functionally rotatably connected, by way of corresponding articulation pivots 22, to the respective elongated bodies 19, substantially at first longitudinal ends 23 thereof.

Moreover, the oscillating sectors 14 are conveniently laterally adjacent and have facing first longitudinal ends 23, the rods 15 comprising first rods 15a that protrude obliquely from the first longitudinal ends 23 so as to cross each other at an angle during use, so as to define interfering areas of action.

In this manner, the branches which, during use of the beating apparatus 10, are substantially in an intermediate position with respect to the oscillating sectors 14 are shaken by them by the combined and opposite action of the first rods 15a.

Advantageously, the motor means 18 comprise an electric motor 24, which is conveniently associated with the supporting body 13, and a speed reduction unit 25, preferably of the gear train type, which functionally interconnects the electric motor 24 and the crank element 17.

Moreover, the motor means 18 conveniently have a cable 26 for the supply of electric power to the electric motor 24, the handle 11 having a telescopic tubular structure that accommodates internally a spiral portion 26a of the cable 26, which by divarication and compaction of its turns makes the cable 26 adaptable to the extension of the handle 11.

At one actuation end 27 of the handle 11 that lies opposite the working end there is conveniently a knob 28, which can be gripped by the user and is equipped with a switch button 29 that is functionally connected to the cable 26 in order to control the activation of the electric motor 24.

Moreover, an alternative embodiment of the beating apparatus 10 comprises a handle 11 composed of two tubular bodies 30 and 31 which are able to slide telescopically inside each other. The first one 30 of the tubular bodies 30 and 31 is provided with a key 32, which is inserted slidingly in a longitudinal slot 33 provided on the second one 31 of the tubular bodies 30 and 31, to contrast their mutual rotation about an axis that is longitudinal with respect to them.

Thus, since mutual rotation of the tubular bodies 30 and 31 of the handle 11 is prevented, the cable 26, which passes within them, is not twisted during the handling of the beating apparatus 10, to the full advantage of its durability over time.

Likewise, in alternative embodiments, not shown in the accompanying figures, the handle comprises more than two tubular bodies, which are provided for example with keys that protrude internally and with external slots in which the keys slide for the telescopic extension of the handle.

Likewise, in substantially equivalent embodiments the keys are replaced with longitudinal ribs.

According to a further embodiment of the beating apparatus 10 the oscillating sectors 14 comprise an elongated body 19 that is provided with substantially conical through seats 34, which are designed to receive by insertion complementarily shaped conical heads 35 that are fixed to ends of the rods 15, the conical heads 35 having
- means 36 for preventing the extraction of the conical heads 35 inserted in the seats 34,
- longitudinal rotation-preventing fins 37, which are inserted in corresponding recesses 38 provided in the seats 34, when the conical heads 35 are inserted in the seats 34, to contrast their mutual rotation.

Conveniently, the extraction-preventing means 36 comprise screws 39 for tensioning the conical heads 35 in the seats 34, such tension screws abutting against a perimetric edge 40 of an exit hole 41 of the seats 34.

In this manner, the conical heads 35 are retained in the seats 34 by the tension screws 39 and cannot rotate thanks to the engagement of the longitudinal fins 37 in the recesses 38.

The rotation of the conical heads 35 in the seats 34 and the consequent wearer and loosening of the rods 15 with respect to the elongated bodies 19 is thus avoided.

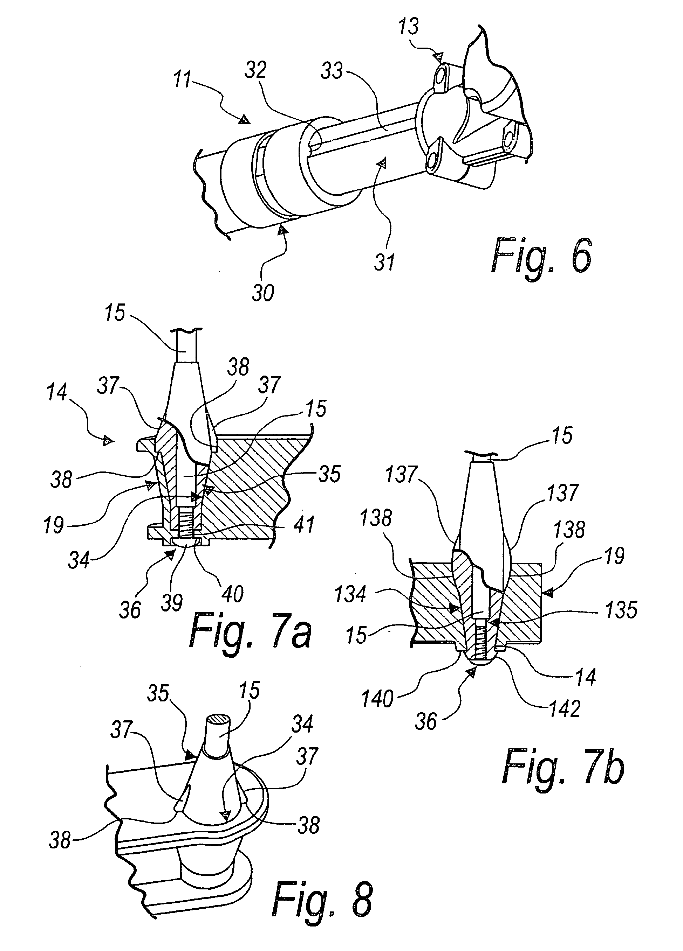

In an alternative embodiment, illustrated by way of non-limiting example in Figure 7, the oscillating sectors 14 comprise an elongated body 19, which is provided with substantially conical through seats 134, which are designed to receive by insertion complementarily shaped conical heads 135 that are fixed to ends of the rods 15.

The conical heads 135 have
- means 136 for preventing the extraction of the conical heads 135 that are inserted in the seats 134, which conveniently comprise pawl-shaped heads 142 provided at the ends of the conical heads 135 inserted in the seats 134, and are adapted to engage a perimetric edge 140 of their exit hole 141 in order to retain thereat the conical heads 135
- rotation-preventing longitudinal fins 137, which are inserted in corresponding recesses 138 provided in the seats 134, when the conical heads 135 are inserted in the seats 134, to contrast their mutual rotation.

The operation of the beating apparatus 10 according to the invention is as follows.

The operator adjusts the extension of the handle 11 by acting on its telescopic structure.

Then, by acting on the switch button 29, he/she activates the electric motor 24, which by means of the speed reduction unit 25 turns the crank element 17.

The oscillating sectors 14a and 14b are thus made to oscillate by the respective linkage elements 16a and 16b, which make them oscillate with different phases.

In this manner, the branches on which the rods 15 of both the oscillating sectors 14 act simultaneously are not subjected by the first oscillating sector 14a to an action that is antagonist with respect to the action that they receive simultaneously from the second oscillating sector 14b.

This leads to an effective shaking of the branches, to the full advantage of efficient beating of the fruits that they carry.

In practice it has been found that the invention achieves the intended aim and objects, providing a beating apparatus, particularly for beating olives and the like, that allows effective shaking of the branches on which it acts, preventing on them an antagonist action of the beating rods by way of their phase-shifted oscillating motion, which is ensured by the actuation by means of the two linkage elements that are moved simultaneously by the crank element.

Further, a beating apparatus according to the invention is structurally simple and compact, since the electric motor is arranged directly at the working end of the handle, so that devices for transmitting motion through the handle, as in currently known beating apparatuses, are not needed.

The absence of such transmission devices with respect to the ones that comprise them allows to obtain beating apparatuses which, provided according to the invention, are lighter and therefore easier to handle and use.

A beating apparatus according to the invention is further reliable and durable over time, since it has a speed reduction unit with a gear cascade which, as is known, is a highly reliable mechanical transmission means.

The invention thus conceived is susceptible of numerous modifications and variations, all of which are within the scope of the appended claims.

In practice, the materials used, as well as the contingent shapes and dimensions, may be any according to requirements and according to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A beating apparatus (10), particularly for beating olives and the like, comprising an elongated handle (11) which is provided, at a working end (12), with a supporting body (13) to which at least one oscillating sector (14) provided with beating rods (15) is articulated, further comprising at least one linkage element (16) which functionally interconnects at least one crank element (17) to said at least one oscillating sector (14) in order to impart thereto, during use, an oscillating motion, said at least one oscillating sector (14) comprising a first oscillating sector (14a) and a second oscillating sector (14b), **characterized in that** said at least one linkage element (16) comprises a first linkage element (16a), which functionally interconnects said first oscillating sector (14a) to said crank element (17), and a second linkage element. (16b), which functionally interconnects said second oscillating sector (14b) to said crank element (17), said crank element (17) being functionally connected to motor means (18) in order to be actuated thereby during use, said crank element (17) having an eccentric pivot (17a), said first linkage element (16a) and said second linkage element (16b) being both rotatably connected to said eccentric pivot (17a), defining a kinematic structure for the actuation of the oscillation of said oscillating sectors (14) that is aimed at impart mutually phase-shifted oscillations to said first oscillating sector (14a) and to said second oscillating sector (14b).

2. The beating apparatus according to claim 1, **characterized in that** said first and second oscillating sectors (14) comprise elongated bodies (19) for supporting said rods (15), which are pivoted by way of corresponding fulcrums (20) to arms (21) of said fork-shaped supporting body (13), said first and second linkage elements (16) being functionally connected, by way of corresponding articulation pivots (22), respectively to the respective elongated bodies (19), substantially at first longitudinal ends (23) thereof.

3. The beating apparatus according to one or more of the preceding claims, **characterized in that** said oscillating sectors (14) are laterally adjacent, having said first longitudinal ends (23) that face each other, said rods (15) comprising first rods (15a) that protrude obliquely from said first longitudinal ends (23) so as to cross at an angle during use, defining interfering areas of action.

4. The beating apparatus according to one or more of the preceding claims, **characterized in that** said motor means (18) comprise an electric motor (24).

5. The beating apparatus according to claim 4, **characterized in that** said electric motor (24) is associated with said supporting body (13).

6. The beating apparatus according to claim 4 or 5, **characterized in that** said motor means (18) comprise a speed reduction unit (25), which functionally interconnect said electric motor (24) to said crank element (17).

7. The beating apparatus according to claim 6, **characterized in that** said speed reduction unit (25) is of the gear train type.

8. The beating apparatus according to any of the claims 4 to 7, **characterized in that** said handle (11) has a telescopic tubular structure, said motor means (18) having a cable (26) for the electric power supply of said electric motor (24) that passes inside the handle (11) and can adapt to its extension.

## Patentansprüche

1. Eine Rüttelvorrichtung (10), insbesondere zum Rütteln von Oliven und dergleichen, die einen verlängerten Griff (11) aufweist, der an einem Arbeitsende (12) mit einem tragenden Körper (13) ausgestattet ist, mit dem mindestens ein Schwingungsabschnitt (14), ausgestattet mit Schlagstäben (15), gelenkig verbunden ist, weiter mindestens ein Verbindungselement (16) aufweisend, das mindestens ein Kurbelelement (17) funktionell mit dem mindestens einen Schwingungsabschnitt (14) verbindet, um ihm während des Gebrauchs eine Schwingungsbewegung zu verleihen, wobei der mindestens eine Schwingungsabschnitt (14) einen ersten Schwingungsabschnitt (14a) und einen zweiten Schwingungsabschnitt (14b) aufweist, **dadurch gekennzeichnet, dass** das mindestens eine Verbindungselement (16) ein erstes Verbindungselement (16a) aufweist, das den ersten Schwingungsabschnitt (14a) funktionell mit dem Kurbelelement (17) verbindet, und ein zweites Verbindungselement (16b), das den zweiten Schwingungsabschnitt (14b) funktionell mit dem Kurbelelement (17) verbindet, wobei das Kurbelelement (17) funktionell mit Motormitteln (18) verbunden ist, um davon während des Gebrauchs betätigt zu werden, und das Kurbelelement (17) einen Exzenterzapfen (17a) hat, wobei sowohl das erste Verbindungselement (16a) als auch das zweite Verbindungselement (16b) drehbar mit dem Exzenterzapfen (17a) verbunden sind und eine kinematische Struktur für die Aktivierung der Schwingung der Schwingungsabschnitte (14) bestimmen, die dazu dient, den ersten Schwingungsabschnitt (14a) und den zweiten Schwingungsabschnitt (14b) in zueinander verschobene Schwingungen zu versetzen.

2. Die Rüttelvorrichtung gemäß Anspruch 1, **dadurch gekennzeichnet, dass** die ersten und zweiten Schwingungsabschnitte (14) verlängerte Körper (19) zum Tragen der Stäbe (15) aufweisen, die über entsprechende Hebelstützen (20) drehgelenkig mit Armen (21) des gabelförmigen tragenden Körpers (13) verbunden sind, wobei die ersten und zweiten Verbindungselemente (16) über entsprechende Drehzapfen (22) funktionell entsprechend mit den entsprechenden verlängerten Körpern (19) verbunden sind, im Wesentlichen an ihren ersten Längsenden (23).

3. Die Rüttelvorrichtung gemäß einem oder mehreren der obigen Ansprüche, **dadurch gekennzeichnet, dass** die Schwingungsabschnitte (14) seitlich nebeneinander liegen, wobei ihre ersten Längsenden (23) einander zugewandt sind und die Stäbe (15) erste Stäbe (15a) umfassen, die schräg aus den ersten Längsenden (23) herausragen, um so während des Gebrauchs in einem Winkel zu kreuzen und sich überschneidende Operationsbereiche zu bestimmen.

4. Die Rüttelvorrichtung gemäß einem oder mehreren der obigen Ansprüche, **dadurch gekennzeichnet, dass** die Motormittel (18) einen Elektromotor (24) aufweisen.

5. Die Rüttelvorrichtung gemäß Anspruch 4, **dadurch gekennzeichnet, dass** der Elektromotor (24) mit dem tragenden Körper (13) verbunden ist.

6. Die Rüttelvorrichtung gemäß Anspruch 4 oder 5, **dadurch gekennzeichnet, dass** die Motormittel (18) eine Drehzahlminderungseinheit (25) aufweisen, die den Elektromotor (24) funktionell mit dem Kurbelelement (17) verbindet.

7. Die Rüttelvorrichtung gemäß Anspruch 6, **dadurch gekennzeichnet, dass** die Drehzahlminderungseinheit (25) vom Getriebezug-Typ ist.

8. Die Rüttelvorrichtung gemäß einem beliebigen der Ansprüche 4 bis 7, **dadurch gekennzeichnet, dass** der Griff (11) eine ausziehbare rohrförmige Struktur hat und die Motormittel (18) ein Kabel (26) für die elektrische Stromversorgung des Elektromotors (24) haben, das in dem Griff (11) verläuft und sich an seine Ausdehnung anpassen kann.

## Revendications

1. Appareil de battage (10), servant particulièrement à battre les olives, et analogues, comprenant un manche allongé (11) pourvu, à une extrémité de travail (12), d'un corps de support (13) par rapport auquel au moins un secteur d'oscillation (14) pourvu de tiges de battage (15) est articulé, comprenant en outre au moins un élément de liaison (16) qui assure une prise directe fonctionnelle entre au moins un élément de manivelle (17) et ledit au moins un secteur d'oscillation (14) afin de lui communiquer, en utilisation, un mouvement d'oscillation, ledit au moins un secteur d'oscillation (14) comprenant un premier secteur d'oscillation (14a) et un second secteur d'oscillation (14b), **caractérisé en ce que** ledit au moins un élément de liaison (16) comprend un premier élément de liaison (16a), qui assure une prise directe fonctionnelle entre ledit premier secteur d'oscillation (14a) et ledit élément de manivelle (17), et un second élément de liaison (16b), qui assure une prise directe fonctionnelle entre ledit second secteur d'oscillation (14b) et ledit élément de manivelle (17), ledit élément de manivelle (17) étant en prise fonctionnelle avec des moyens moteurs (18) afin d'être actionné par ceux-ci pendant l'utilisation, ledit élément de manivelle (17) comportant un pivot excentré (17a), ledit premier élément de liaison (16a) et ledit second élément de liaison (16b) étant tous les deux reliés mobiles en rotation audit pivot excentré (17a), en définissant une structure cinématique destinée à la mise en oeuvre de l'oscillation desdits secteurs d'oscillation (14) qui vise à communiquer des oscillations mutuellement déphasées audit premier secteur d'oscillation (14a) et audit second secteur d'oscillation (14b).

2. Appareil de battage selon la revendication 1, **caractérisé en ce que** lesdits premier et second secteurs d'oscillation (14) comprennent des corps allongés (19) destinés à supporter lesdites tiges (15), qui pivotent au moyen de points d'appui correspondants (20) par rapport aux bras (21) dudit corps de support en forme de fourche (13), lesdits premier et second éléments de liaison (16) étant liés de manière fonctionnelle, au moyen de pivots d'articulation correspondants (22), respectivement aux corps allongés respectifs (19), sensiblement au niveau de leurs premières extrémités longitudinales (23).

3. Appareil de battage selon l'une ou plusieurs des revendications précédentes, **caractérisé en ce que** lesdits secteurs d'oscillation (14) sont latéralement adjacents, lesdites premières extrémités longitudinales (23) se faisant face l'une l'autre, lesdites tiges (15) comprenant des premières tiges (15a) qui font saillie obliquement desdites premières extrémités longitudinales (23) de façon à se croiser à un certain angle pendant l'utilisation, en définissant des zones d'interférence d'action.

4. Appareil de battage selon l'une ou plusieurs des revendications précédentes, **caractérisé en ce que** lesdits moyens moteurs (18) comprennent un moteur électrique (24).

5. Appareil de battage selon la revendication 4, **caractérisé en ce que** ledit moteur électrique (24) est associé audit corps de support (13).

6. Appareil de battage selon la revendication 4 ou 5, **caractérisé en ce que** lesdits moyens moteurs (18) comprennent une unité de réduction de vitesse (25), qui assure une prise directe fonctionnelle entre ledit moteur électrique (24) et ledit élément de manivelle (17).

7. Appareil de battage selon la revendication 6, **caractérisé en ce que** ladite unité de réduction de vitesse (25) est du type train d'engrenages.

8. Appareil de battage selon l'une quelconque des revendications 4 à 7, **caractérisé en ce que** ledit manche (11) a une structure tubulaire télescopique, lesdits moyens moteurs (18) possédant un câble (26) destiné à l'alimentation électrique dudit moteur électrique (24) qui passe à l'intérieur du manche (11) et qui peut s'adapter à son déploiement.
